# EUROPEAN PATENT APPLICATION

(11) **EP 1 523 193 A1**
(43) Date of publication of application: **13.04.2005**
(21) Application number: 04077609.8
(22) Date of filing: 20.09.2004
(51) Int. Cl.: H04N 7/18

(54) **Digital camera interface**

(30) Priority: 06.10.2003 US 679727
(71) Applicant: Delphi Technologies, Inc., Troy Michigan 48007 (US)
(72) Inventor: Li, Songnian, Kokomo, IN 46902 (US); Voreis, Thomas L., Noblesville, IN 46060 (US); Kong, Hongzhi, Kokomo, IN 46902 (US)
(74) Representative: Denton, Michael John

(57) **Abstract**

A host processor to camera interface (100) includes a camera side interface (114), a host processor side interface (134) and a cable (150) coupling a camera side transmitter (108) to a host processor side receiver (128).

## Description

### Technical Field

The present invention is generally directed to an interface and, more specifically, to a digital camera interface.

### Background of the Invention

Today, digital cameras have increasingly been integrated within motor vehicles to provide real-time images for further processing. In a typical situation, a digital camera may be separated from an electronic control unit (ECU), which includes an imbedded processor and/or a digital signal processor (DSP), that implements vision processing and decision making algorithms.

Captured images may be transferred from a camera to a host processor in various formats. For example, captured images may be transferred from a camera to a host processor as analog video, transmitted through an inexpensive coaxial cable. Interfaces implementing a universal serial bus (USB) 2.0/on-the-go (OTG) protocol may also be used to serially transmit digital data from a digital camera to a host processor. Further, an IEEE 1394 (Firewire) interface may be utilized to transmit digital data from a digital camera to a host processor for further processing. MOST and camera link are two other interfaces that may also be utilized to transmit data from a camera to a host processor for further processing. It should be appreciated that transferring the data via an analog video signal is generally not desirable when the data is provided from a camera in a digital format. Further, technologies, such as USB and IEEE 1394, are generally either not suitable or are too expensive for automotive applications. Additionally, technologies such as MOST are generally too slow and camera link tends to be relatively expensive.

What is needed for automotive applications is a low-cost, high-performance camera to host processor interface.

### Summary of the Invention

According to the present invention, a host processor to camera interface includes a camera side interface, a host processor side interface and a cable for coupling a camera side transmitter to a host processor side receiver. A camera side link layer is coupled to a camera, which provides video data that the camera side link layer converts to a desired video data format. A serializer, that is coupled to the camera side link layer, serializes the video data in the desired video data format and a camera side transmitter, which is coupled to the serializer, transmits the serialized video data in the desired video data format. The host processor side receiver receives the serialized video data and a deserializer that is coupled to the host processor side receiver deserializes the video data. A host processor side link layer that is coupled between the deserializer and a host processor is adapted to convert the deserialized video data into a format compatible with the host processor, when required. The cable includes wires for carrying power and couples the camera side transmitter to the host processor side receiver.

In another embodiment, the camera side link layer is configured to convert a plurality of camera video data formats into the desired video data format. In yet another embodiment, the camera video data formats include a single 8-bit data format, a dual 8-bit data format, a single 16-bit data format, a single 24-bit data format and a single 12-bit data format.

According to another embodiment, at least one of the camera video data formats provides a frame valid (FVAL) signal and a line valid (LVAL) signal that are combined by the camera side link layer into a single validation (XVAL) signal that is provided to the host processor side link layer. In still another embodiment, the XVAL signal corresponds to the LVAL signal with an added end-of-frame (EOF) signal.

In yet another embodiment, a low-voltage differential signaling (LVDS) receiver, which provides for serial-to-camera (SERTC) channel communications, is located within the camera side interface. The inputs of the LVDS receiver are coupled to outputs of the camera side transmitter and an output of the LVDS receiver is coupled to the camera side link layer. In this embodiment, an LVDS transmitter, which provides for SERTC channel communications, is located within the host processor side interface. The SERTC channel is provided for reconfiguring the camera and an input of the LVDS transmitter is coupled to the host processor side link layer and outputs of the LVDS transmitter are coupled to inputs of the host processor side receiver.

In yet another embodiment, the cable includes a first pair of signal wires for carrying the video data, which is in the form of a low-voltage differential signaling (LVDS) data stream. In another embodiment, the camera side link layer and the host processor side link layer are configured to share the first pair of signal wires to communicate the video data in the desired video signal format and configuration signals for the SERTC channel.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
Fig. 1A is an electrical block diagram of a camera side interface constructed according to one embodiment of the present invention;
Fig. 1B is an electrical block diagram of a host processor side interface constructed according to another embodiment of the present invention;
Fig. 2 is a timing diagram depicting the conversion of two 8-bit pixel data streams into one 8-bit data stream; and
Fig. 3 is a timing diagram depicting a technique for combining a frame valid (FVAL) signal and a line valid (LVAL) signal into a single validation (XVAL) signal.

### Description of the Preferred Embodiments

According to the present invention, a low-cost, high-performance host processor to camera interface is disclosed herein. In its basic embodiment, the host processor to camera interface includes a camera side interface that is coupled by a cable to a host processor side interface. The camera side interface includes a camera side link layer coupled to a camera, with the camera providing video data and the camera side link layer converting the video data to a desired video data format. The camera side interface also includes a serializer coupled to the camera side link layer for serializing the video data in the desired video data format. A camera side transmitter that is coupled to the serializer transmits the serialized video data to the host processor side interface, via the cable.

The host processor side interface includes a host processor side receiver, a deserializer and a host processor side link layer. The host processor side receiver receives serialized video data and is coupled to the deserializer, which deserializes the video data. The host processor side link layer is coupled to the deserializer and the host processor and is adapted to convert the deserialized video data into a format compatible with the host processor, when required. The cable includes wires for carrying power and couples the camera side transmitter to the host processor side receiver.

In one embodiment, the camera side link layer is configured to convert a plurality of camera video data formats into a desired video data format. The video data formats may include a variety of formats, e.g., a single 8-bit data format, a dual 8-bit data format, a single 16-bit data format, a single 24-bit data format and/or a single 12-bit format, among other data formats. When the video data is in electronic form, i.e., not optical, the cable includes at least one pair of wires for transmitting the data stream and two wires for power and ground. It should be appreciated that existing USB2.0/OTG cables or an IEEE 1394 cable can generally provide adequate data and power carrying capability. When the data stream is in an optical format, it should be appreciated that a fiber optic cable carries the video data signal. It should also be appreciated that when a signal is in an optical format, the host processor side interface includes circuitry for converting the optical signal to an electronic signal.

The camera side link layer and the host processor side link layer may be implemented with a variety of devices, e.g., an inexpensive field programmable gate array (FPGA), an electrically programmable logic device (EPLD) or a low cost microcontroller. The serializer for the camera side interface and the deserializer for the host processor side interface, as well as the SERTC transceiver may be off-the-shelf components. For example, whenever the implemented system utilizes low-voltage differential signaling (LVDS): the deserializer may be a DS92LV1212A manufactured and made commercially available by National Semiconductor; the serializer may be a DS92LV1021A manufactured and made commercially available by National Semiconductor; and the transceiver may be a DS90LV019 driver/receiver manufactured and made commercially available by National Semiconductor. Alternatively, the serializer, deserializer and SERTC transceiver may be implemented using USB or IEEE 1394 technologies.

As implemented, a single or dual camera system may provide a digital video data stream to the camera side link layer at a pixel clock rate of CM-MCLK. Depending upon the camera(s) implemented, the video data or camera pixel data may have different data formats corresponding to a specific imager manufacturer. The camera side link layer provides a set of digital logics that convert different types of camera pixel data into a desired video data format. It should be appreciated that the desired video data format may vary based upon a format required by an implemented serializer, which performs real-time parallel-to-serial conversion. For example, a serializer that converts 10-bit parallel data into a serial output would generally use 8-bits of pixel data, D0-D7, a validation (XVAL) signal, which is required to synchronize the frames and lines of the images, and may include an additional bit for flexible purposes, such as to read out camera parameters in real-time.

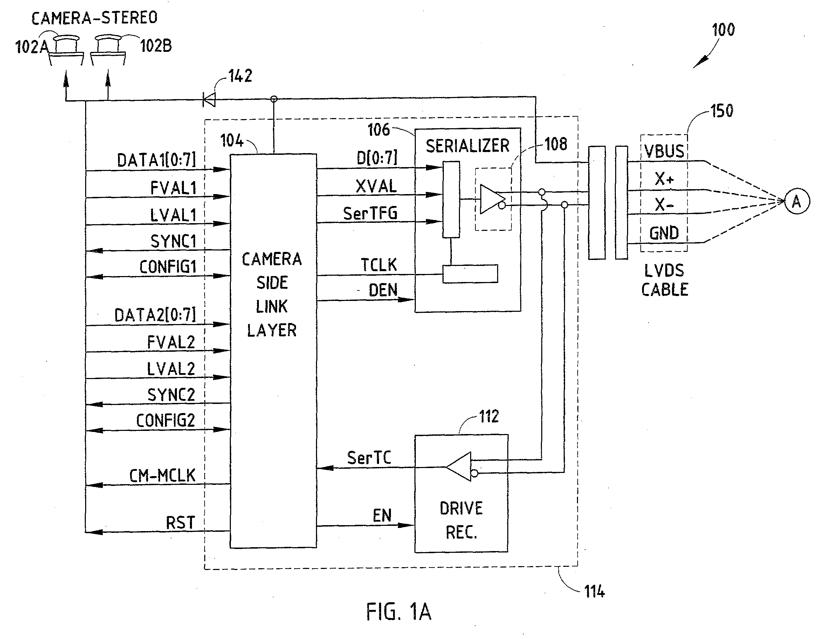

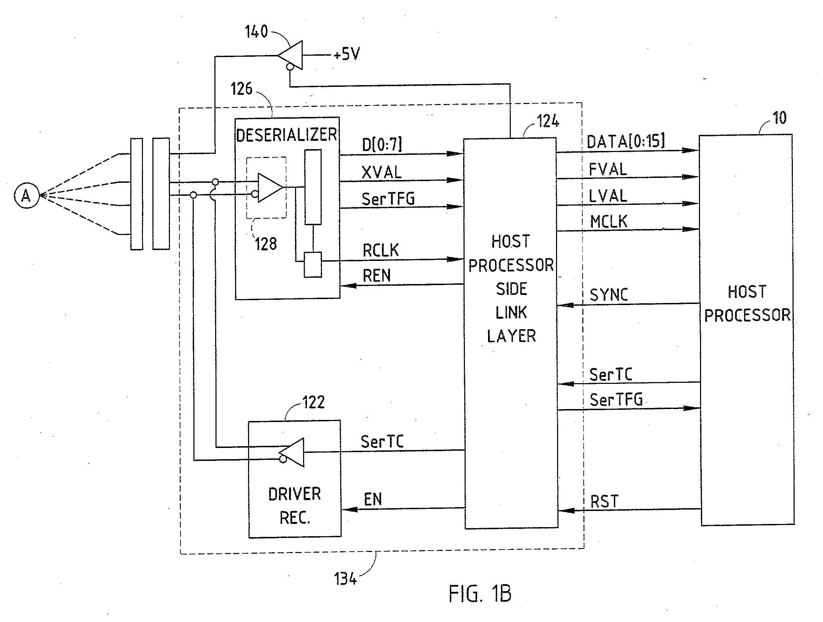

Figs. 1A and 1B depict a host processor to camera interface 100 that is designed to transfer stereo camera pixel data from a pair of cameras 102A and 102B. A camera side interface 114 includes a camera side link layer 104, a serializer 106 and a driver/receiver 112. The camera side link layer 104 receives a number of signals from cameras 102A and 102B and may provide various configuration signals to the cameras 102A and 102B. Data received by the camera side link layer 104 may be converted from two 8-bit pixel streams, Data1[0:7] and Data2[0:7], into a single data stream D[0:7] with one validation (XVAL) signal. The serializer 106 converts the 10-bits of information and utilizes a transmitter 108 (located within the serializer 106) to transfer the data via cable 150, which may be a low voltage differential signal (LVDS) cable, to a host processor side interface 134.

The host processor side interface 134 includes a deserializer 126 (that includes a receiver 128), a driver/receiver 122 and a host processor side link layer 124. The deserializer 126 converts the data received from the serializer 106 into parallel data, including 8-bits of pixel data D[0:7], a validation (XVAL) signal and an additional bit SerTFG for flexible purposes, such as to read out camera parameters in real-time. The host processor side link layer 124 converts the data, if required, to be compatible with host processor 10. The conversion may include converting the 8-bits of data D[0:7] to 16-bits of data Data[0:15], which represents the two 8-bit serial streams provided by the cameras 102A and 102B. The host processor 10 may provide a reset (RST) signal to the host processor side link layer 124, which in turn provides the RST signal to the cameras 102A and 102B, via the driver/receiver 122, driver/receiver 112 and the camera side link layer 104. In the event that the data provided by the deserializer 126 is in a format that is compatible with the host processor 10, the functions performed by the host processor side link layer 124 may essentially be performed by the host processor 10.

The table below depicts the conversion of several popular digital imager data formats into the above-described 10-bit parallel data format.

| **Camera** | **TCLK** | **Pixel Data to Serializer** |
|---|---|---|
| Single 8-bit/Mono | CM-MCLK | D[0:7] = CM-Data[0:7] |
| Dual 8-bit/Mono (Stereo Vision) | CM-MCLK x 2 | D[0:7] ₖ = CM1-Data[0:7] D[0:7] ₖ₊₁ = CM2-Data[0:7] |
| Single 16-bit | CM-MCLK x 2 | D[0:7] ₖ = CM-Data[0:7] D[0:7] ₖ₊₁ = CM-Data[8:15] |
| Single 24-bit/Mono Or 8-bit/Color | CM-MCLK x 3 | D[0:7] ₖ = CM-Data[0:7] D[0:7] ₖ₊₁ = CM-Data[8:15] D[0:7] ₖ₊₂ = CM-Data[16:23] |
| Single 12-bit/Mono | CM-MCLK x 2 | D[0:7] ₖ = CM-Data[0:7] D[0:3] ₖ₊₁ = CM-Data[8:11] D[4:7] ₖ₊₁ = 0 |

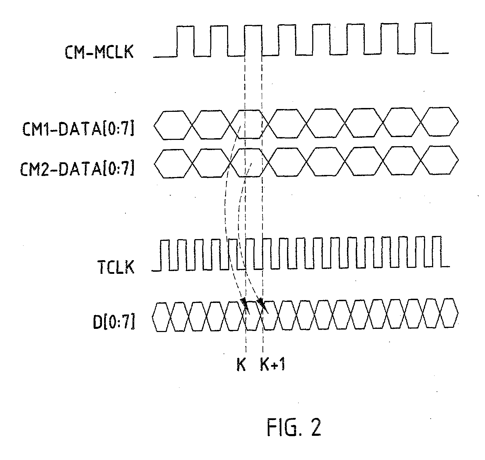

With reference to Fig. 2, a timing diagram is depicted that details the conversion of video data from a dual 8-bit camera into a 10-bit parallel data format. The CM-MCLK clock signal is a pixel clock rate signal that is synchronized with camera pixel data CM1-Data[0:7] and CM2-Data[0:7] provided by the cameras 102A and 102B. A signal TCLK, which is provided by the camera side link layer 104, is twice the rate of the camera signal CM-MCLK clock signal. As is shown in Fig. 2, a signal D[0:7] is the 8-bit data string provided by the conversion of the camera pixel data CM1-Data[0:7] and CM2-Data[0:7].

As a general rule, most digital cameras output horizontal and vertical clocks, as well as camera pixel data. These horizontal and vertical clocks are used to indicate which pixel stands for the first pixel of a frame and which pixel stands for a specific line. For example, in the camera link standard these horizontal and vertical clocks are known as a frame valid (FVAL) signal and a line valid (LVAL) signal, respectively. According to an embodiment of the present invention, a validation (XVAL) signal is utilized to represent both the FVAL and LVAL signals using only one data bit. It should be appreciated that there are a number of ways to combine the FVAL and LVAL signals to provide the XVAL signal.

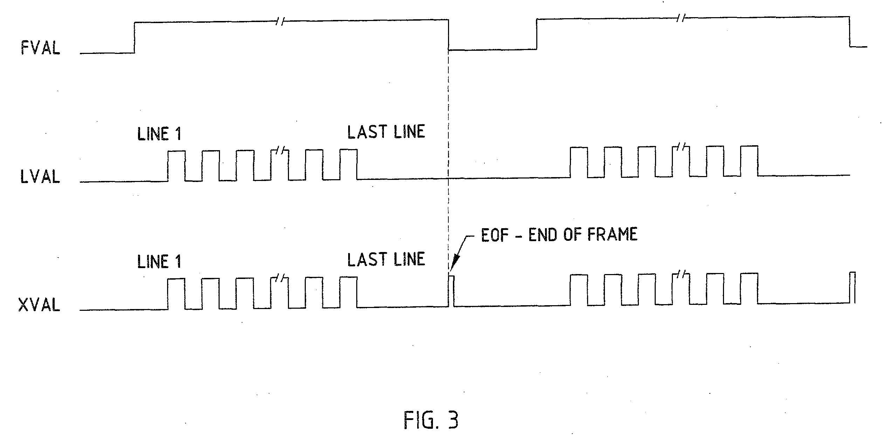

With reference to Fig. 3, a timing diagram illustrates the embedding of an end-of-frame (EOF) pulse with the LVAL signal to create the XVAL signal. In this embodiment, to identify the EOF pulse from the LVAL pulse string, the EOF pulse width may be much smaller than the LVAL pulse width. According to this embodiment, the deserializer 126 in the host processor side interface 134 recovers the serial data as well as the imbedded clock (RCLK) to provide the parallel pixel data that was input into the serializer 106. It should be appreciated that if this data format is acceptable to the host processor 10, the host processor side link layer 124 is not required to convert the data or, alternatively, can be merged with related electronics. However, if data conversion is needed, the host processor side link layer 124 may be employed to further recover or convert the video data into a desired format.

According to the present invention, a remotely mounted camera or cameras can provide video data in real-time with minimized delay and essentially zero data loss, similar to a camera that is directly coupled to a host processor.

In another embodiment of the present invention, in systems that need a camera that requires reconfiguration, a serial-to-camera (SERTC) channel may be provided. It should be appreciated that the SERTC channel can share the same wire pair utilized to transfer camera pixel data or, alternatively, another wire pair may be provided, if desired. In the event that bus sharing is desired for lower cost cabling, the link layers of both the transmitter and receiver side may follow a simple protocol of sharing the serial bus. In any event, the protocol defines when and how to enable or disable the serializer or the SERTC channel transmitter in an appropriate manner.

In the event that the serial bus needs to be released to the SERTC channel, a host processor side link layer may send a trigger pulse (SERTC-Request) to the transmitter through the power line (VBUS). In this case, the camera side link layer responds to the SERTC-Request signal by disabling the serializer and enabling the SERTC channel receiver. At that point, the bus is free and ready to be released to the SERTC channel. The processor side link layer 124 may then detect the bus status by monitoring the deserializer 126 outputs. When a free bus is detected, the host processor side link layer 124 enables the SERTC channel transmitter 122 and the bus is released to the SERTC channel to establish a serial communication interface (SCI) between the cameras 102A and 102B and the host processor 10.

The serial bus may be released to provide a video data stream from the camera to the host processor in a number of ways. For example, an SERTC-Request trigger pulse may be generated. Alternatively, the SCI to camera connection may be utilized. When the SCI to camera interface is utilized, the host processor may send a reset byte to the host processor side link layer 124 or, alternatively, reset the host processor side link layer 124 using a reset (RST) pin. In any event, the host processor side link layer 124 is programmed such that on detecting a reset message, it disables the SERTC channel transmitter 122 and enables the deserializer 126. In this embodiment, the camera side link layer 104 detects the bus release and consequently disables the SERTC channel receiver 112 and enables the serializer 106.

It should be appreciated that a camera can be reset through a number of techniques, e.g., by switching off the power to the camera or by sending an SERTC-Request pulse train, i.e., more than one pulse, to the camera side link layer 104. An outside trigger signal may also be used to initiate capturing of new frames by the camera. This may be achieved by imbedding a trigger camera pulse on the power line VBUS. Alternatively, once the serial bus is released to the SCI, the host processor 10 may send a trigger camera message to the camera side link layer 104. In this embodiment, the camera side link layer 104 decodes the message and sends a trigger pulse to the cameras 102A and 102B. Utilizing an interface configured according to the present invention allows for data transfer at a rate of up to about 400 megabits per second, which provides for about 65 frames per second for dual 8-bit mono VGA camera applications.

It should be appreciated that the host processor to camera interface described herein may be utilized in a number of applications, such as interior looking cameras that utilize single or dual 8-bit mono VGA and outside looking cameras, such as single 16-bit cameras.

Accordingly, a low-cost high-speed interface for linking a camera to a remote electronic control unit (ECU) processor for automotive applications has been described herein. Embodiments of the present invention provide a unique way of sending real-time digital camera data without the need for expensive serial data bus link layer electronics. Such a host processor to camera interface may be particularly useful in applications, such as eye gaze monitoring, lane tracking, pre-crash sensing, among other applications.

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1. A host processor to camera interface (100), comprising:
a camera side interface (114), including:
a camera side link layer (104) coupled to a camera (102A), the camera (102A) providing video data, the camera side link layer (104) converting the video data to a desired video data format;
a serializer (106) coupled to the camera side link layer (104) for serializing the video data in the desired video data format; and
a camera side transmitter (108) coupled to the serializer (106), the camera side transmitter (108) transmitting the serialized video data;
a host processor side interface (134), including:
a host processor side receiver (128) for receiving the serialized video data;
a deserializer (126) coupled to the host processor side receiver (128), the deserializer (126) deserializing the serialized video data; and
a host processor side link layer (124) coupled to the deserializer (126) and a host processor (10), wherein the host processor side link layer (124) is adapted to convert the deserialized video data into a format compatible with the host processor (10) when required; and
a cable (150) for carrying the video data, the cable (150) including a pair of power wires for carrying power, the cable (150) coupling the camera side transmitter (108) to the host processor side receiver (128).

2. The interface (100) of claim 1, wherein the camera side link layer (104) is configured to convert a plurality of camera video data formats into the desired video data format.

3. The interface (100) of claim 2, wherein the camera video data formats include a single 8-bit data format, a dual 8-bit data format, a single 16-bit data format, a single 24-bit data format and a single 12-bit data format.

4. The interface (100) of claim 2, wherein at least one of the camera video data formats provides a frame valid (FVAL) signal and a line valid (LVAL) signal, and wherein the camera side link layer (104) combines the FVAL signal and the LVAL signal into a single validation (XVAL) signal that is provided to the host processor side link layer (124).

5. The interface (100) of claim 4, wherein the XVAL signal corresponds to the LVAL signal with an added end-of-frame (EOF) signal.

6. The interface (100) of claim 5, wherein a pulse width of the EOF signal is less than a pulse width of the LVAL signal.

7. The interface (100) of claim 1, wherein the functionality of the host processor side link layer (124) is incorporated within the host processor (10).

8. The interface (100) of claim 1, further including:
a low-voltage differential signaling (LVDS) receiver (112) for serial-to-camera (SERTC) channel communications located within the camera side interface (114), wherein inputs of the LVDS receiver (112) are coupled to outputs of the camera side transmitter (108) and an output of the LVDS receiver (112) is coupled to the camera side link layer (104); and
an LVDS transmitter (122) for SERTC channel communications located within the host processor side interface (134), wherein the SERTC channel is provided for reconfiguring the camera (102A), and wherein an input of the LVDS transmitter (122) is coupled to the host processor side link layer (124) and outputs of the LVDS transmitter (122) are coupled to inputs of the host processor side receiver (128).

9. The interface (100) of claim 8, wherein the cable (150) includes a first pair of signal wires for carrying the video data, and wherein the video data is in the form of a low-voltage differential signaling (LVDS) data stream.

10. The interface (100) of claim 9, wherein the camera side link layer (104) and the host processor side link layer (124) are configured to share the first pair of signal wires to communicate the video data in the desired video signal format and configuration signals for the SERTC channel.

11. The interface (100) of claim 9, wherein the cable (150) further includes:
a second pair of signal wires to communicate configuration signals for the SERTC channel.

12. A host processor to camera interface (100) for a motor vehicle, comprising:
a camera side interface (114), including:
a camera side link layer (104) coupled to a camera (102A), the camera (102A) providing video data, the camera side link layer (104) converting the video data to a desired video data format, wherein the camera (102A) is attached to the motor vehicle;
a serializer (106) coupled to the camera side link layer (104) for serializing the video data in the desired video data format; and
a camera side transmitter (108) coupled to the serializer (106), the camera side transmitter (108) transmitting the serialized video data;
a host processor side interface (134), including:
a host processor side receiver (128) for receiving the serialized video data;
a deserializer (126) coupled to the host processor side receiver (128), the deserializer (126) deserializing the serialized video data; and
a host processor side link layer (124) coupled to the deserializer (126) and a host processor (10), wherein the host processor side link layer (124) is adapted to convert the deserialized video data into a format compatible with the host processor (10) when required, and wherein the host processor (10) is incorporated within an electronic control unit (ECU) of the motor vehicle that is remote from the camera (102A); and
a cable (150) for carrying the video data, the cable (150) including a pair of power wires for carrying power, the cable (150) coupling the camera side transmitter (108) to the host processor side receiver (128), wherein the camera side link layer (104) is configured to convert a plurality of camera video data formats into the desired video data format, and wherein the camera video data formats include a single 8-bit data format, a dual 8-bit data format, a single 16-bit data format, a single 24-bit data format and a single 12-bit data format.

13. The interface (100) of claim 12, wherein at least one of the camera video data formats provides a frame valid (FVAL) signal and a line valid (LVAL) signal, and wherein the camera side link layer (104) combines the FVAL signal and the LVAL signal into a single validation (XVAL) signal that is provided to the host processor side link layer (124).

14. The interface (100) of claim 13, wherein the XVAL signal corresponds to the LVAL signal with an added end-of-frame (EOF) signal.

15. The interface (100) of claim 14, wherein a pulse width of the EOF signal is less than a pulse width of the LVAL signal.

16. The interface (100) of claim 12, wherein the functionality of the host processor side link layer (124) is incorporated within the host processor (10).

17. The interface (100) of claim 12, further including:
a low-voltage differential signaling (LVDS) receiver (112) for serial-to-camera (SERTC) channel communications located within the camera side interface (114), wherein inputs of the LVDS receiver (112) are coupled to outputs of the camera side transmitter (108) and an output of the LVDS receiver (112) is coupled to the camera side link layer (104); and
an LVDS transmitter (122) for SERTC channel communications located within the host processor side interface (134), wherein the SERTC channel is provided for reconfiguring the camera (102A), and wherein an input of the LVDS transmitter (122) is coupled to the host processor side link layer (124) and outputs of the LVDS transmitter (122) are coupled to inputs of the host processor side receiver (128).

18. The interface (100) of claim 17, wherein the cable (150) includes a first pair of signal wires for carrying the video data, and wherein the video data is in the form of a low-voltage differential signaling (LVDS) data stream.

19. The interface (100) of claim 18, wherein the camera side link layer (104) and the host processor side link layer (124) are configured to share the first pair of signal wires to communicate the video data in the desired video signal format and configuration signals for the SERTC channel.

20. The interface (100) of claim 18, wherein the cable (150) further includes:
a second pair of signal wires to communicate configuration signals for the SERTC channel.

21. A method for sharing a pair of signal wires, comprising the steps of:
providing a trigger pulse from a host processor side link layer (124) to a camera side link layer (104) through a power line;
disabling a serializer (106) in the camera side interface (114) and enabling a serial-to-camera (SERTC) channel receiver (112) in the camera side interface (114) in response to receiving the trigger pulse on the power line;
monitoring the status of the pair of signal lines by examining outputs of a deserializer (126) located in the host processor side interface (134);
enabling a SERTC channel transmitter (122) located in the host processor interface (134) to establish a serial communication interface (SCI) between a camera (102A) coupled to the camera side link layer (104) and a host processor (10) coupled to the host processor side link layer (124) via the pair of signal lines when the outputs of the deserializer (126) indicate the pair of signal lines are free.

22. The method of claim 21, further including the steps of:
disabling the SERTC channel transmitter (122) and the SERTC channel receiver (112) and enabling the deserializer (126) and the serializer (106) in response to a reset message, wherein the reset message is provided by the host processor (10) sending a reset signal to the host processor side link layer (124).
